(19) Europäisches Patentamt
European Patent Office
Office européen des brevets

(11) **EP 2 860 096 A1**

(12) **EUROPEAN PATENT APPLICATION**

(43) Date of publication:
**15.04.2015 Bulletin 2015/16**

(51) Int Cl.:
***B62M 6/50*** *(2010.01)*

(21) Application number: **14167830.0**

(22) Date of filing: **12.05.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **10.10.2013 KR 20130120762**

(71) Applicant: **Samsung Electro-Mechanics Co., Ltd.**
**Suwon-Si, Gyeonggi-Do 443-743 (KR)**

(72) Inventor: **Hong, Bok Young**
**443-743 Gyeonggi-do (KR)**

(74) Representative: **Heine, Christian Klaus**
**KNH Patentanwälte Kahlhöfer Neumann**
**Rößler Heine PartG mbB**
**Postfach 10 33 63**
**40024 Düsseldorf (DE)**

(54) **Apparatus and method for controlling motor of electrical powered cycle**

(57) Disclosed herein are an apparatus and a method for controlling a motor (20) of an electrical powered cycle. The apparatus for controlling a motor (20) of an electrical powered cycle includes an acceleration sensor (60) mounted in the electrical powered cycle to measure and output an acceleration; and a control unit (62) extracting a pedal frequency synchronization sinusoidal component from the acceleration output from the acceleration sensor (60) to estimate a pedal torque and then drive the motor (20) depending on the estimated pedal torque.

FIG.8

EP 2 860 096 A1

**Description**

CROSS REFERENCE TO RELATED APPLICATION

This application claims the benefit of Korean Patent Application No. 10-2013-0120762, filed on October 10, 2013, entitled "Apparatus and Method for Controlling Motor of Electrical Powered Cycle", which is hereby incorporated by reference in its entirety into this application

BACKGROUND OF THE INVENTION

1. Technical Field

The present invention relates to an apparatus and a method for controlling a motor of an electrical powered cycle.

2. Description of the Related Art

A bike is configured of a front wheel which is a steering wheel and a rear wheel which is a driving wheel which are disposed at a front and a rear of a frame in a straight line and is configured to go forward by allowing a passenger to press a pedal connected to a rear wheel so as to rotate the rear wheel. The bike includes a power transmission apparatus, such as a chain and a bevel gear which transmit power generated from the pedal to the rear wheel.
In particular, the power transmission apparatus of the chain type is configured to include a driving sprocket which is mounted at one side of the pedal, a driven sprocket which has a diameter smaller than that of the driving sprocket and is mounted at the rear wheel which is the driving wheel, and a chain which connects the driving sprocket to the driven sprocket.
Therefore, when the passenger presses the pedal by the above configuration, the driving sprocket integrally mounted with the pedal rotates and at the same time the rear wheel connected to the driven sprocket also rotates by the chain, such that the bike goes forward.
Since the bike is driven by a pedal effort generated when the user is pedaling, the bike does not have much difficulty in traveling at a flat road, but when the bike drives up a slope, such as a hill, much effort is required.
To solve the problem, an electrical powered cycle mounted with a motor so as to be driven using a driving force of the motor in addition to the pedal effort of the user has been developed recently.
That is, the electrical powered cycle uses the motor driven with a battery and is configured to be driven with only the pedal effort of the user, only the force of the motor driven with the battery, or both of the pedal effort and the force of the motor.
When the electrical powered cycle according to the related art drives up a hill, the electric bike uses a torque sensor mounted at a shaft of the pedal to automatically control the driving force of the motor depending on a signal output from the torque sensor.
As a type of the torque sensor, there are a magnetic type in which an inductor senses a magnetic field generated depending on the amount of twisting of a twist sensor coil to generate a voltage and a strain gauge type in which a twist sensor mounted between a pedal and a crank measures the magnetic field.
However, the torque sensor is very expensive. The torque essentially senses the twisting of the shaft. In this case, the twisted amount is very insignificant and therefore needs to be precisely amplified.
Further, since the shaft rotates but a controller receiving information does not rotate, many technologies to transmit information are required, such that the torque sensor is very expensive. Therefore, a PAS type using the torque sensor is considered as a very expensive function.

[Prior Art Document]

[Patent Document]

(Patent Document 1) Korean Patent Laid-Open Publication No. 10-2013-0034424
(Patent Document 2) Korean Patent Laid-Open Publication No. 10-2013-0013115

SUMMARY OF THE INVENTION

The present invention has been made in an effort to provide an apparatus and a method for controlling a motor of an electrical powered cycle capable of controlling the motor by detecting an acceleration of a pedal and calculating a pedal torque from the detected acceleration of the pedal.

According to a preferred embodiment of the present invention, there is provided an apparatus for controlling a motor of an electrical powered cycle, including: an acceleration sensor mounted in the electrical powered cycle to measure and output an acceleration; and a control unit extracting a pedal frequency synchronization sinusoidal component from the acceleration output from the acceleration sensor to estimate a pedal torque and then drive the motor depending on the estimated pedal torque.

The control unit may detect $g\sin\theta + a$ as the pedal frequency synchronization sinusoidal component when a tilt angle of the cycle is set to be $\theta$, a gravitational acceleration among accelerations output from the acceleration sensor is set to be g, and an acceleration of a progress direction is set to be a.

The control unit may drive the motor depending on an average estimated pedal torque which is an average value of the estimated pedal torque.

The control unit may remove an offset from an average pedal torque and use the average pedal torque from which the offset is removed to drive the motor.

The control unit may remove an offset from the estimated pedal torque and use the estimated pedal torque from which the offset is removed to drive the motor.

The control unit may include: a pedal frequency component detector which detects $g\sin\theta + a$ as a pedal frequency synchronization sinusoidal component when a tilt angle of the cycle is set to be $\theta$, a gravitational acceleration among the accelerations output from the acceleration sensor is set to be g, and an acceleration of a progress direction is set to be a; a pedal torque calculator which estimates the pedal torque from the pedal frequency synchronization sinusoidal component from the pedal frequency component detector; and a controller which drives the motor depending on the estimated pedal torque calculated by the pedal torque calculator.

The control unit may further include: an average pedal torque calculator which obtains an average estimated pedal torque from a difference between a maximum value and a minimum value for one pedal period of the estimated pedal torque calculated by the pedal torque calculator, and the controller may drive the motor depending on the average estimated pedal torque which is calculated by the average pedal torque calculator.

The control unit may further include: an offset remover which removes the offset from the estimated pedal torque calculated by the pedal torque calculator, and the controller drives the motor depending on the estimated pedal torque from which the offset is removed.

The control unit may include: a speed sensor measuring and outputting a speed of the cycle; a pedal angle sensor measuring and outputting a pedal angle; and a database storing an offset table in which offsets are tabulated by the speed of the cycle, a slope, and a maximum value and a minimum value of the pedal torque, and the offset controller may calculate the slope using the acceleration measured by the acceleration sensor, receive the speed of the cycle from the speed sensor, and receive the pedal angle from the pedal angle sensor to calculate the maximum value and the minimum value of the pedal torque calculated by the pedal torque calculator and then refer to the offsets of the offset table stored in a database depending on the slope, the speed of the cycle, and the maximum value and the minimum value to remove the offset of the estimated pedal torque.

The apparatus for controlling a motor of an electrical powered cycle may further include: a display unit displaying a mode selection menu; and a selector switch receiving a selection signal of a passenger, wherein the control unit displays the mode selection menu on the display unit and when the passenger selects a mode using the selector switch, drives the motor depending on the estimated pedal torque depending on the selected mode.

According to another preferred embodiment of the present invention, there is provided a method for controlling a motor of an electrical powered cycle, including: (A) measuring and outputting, by an acceleration sensor, an acceleration of the electrical powered cycle; and (B) extracting, by a control unit, a pedal frequency synchronization sinusoidal component from the acceleration output from the acceleration sensor to estimate a pedal torque and then drive the motor depending on the estimated pedal torque.

The method for controlling a motor of an electrical powered cycle may further include: (C) calculating, by the control unit, an average estimated pedal torque which is an average value of the estimated pedal torque, wherein the control unit drives the motor depending on the average estimated pedal torque.

The method for controlling a motor of an electrical powered cycle may further include: after the estimating of the average estimated pedal torque in the step (C), (D) removing, by the control unit, an offset from the average estimated pedal torque and using the average estimated pedal torque from which the offset is removed to drive the motor.

The method for controlling a motor of an electrical powered cycle may further include: after the estimating of the pedal torque in the step (B), (E) removing, by the control unit, the offset from the estimated pedal torque and using the estimated pedal torque from which the offset is removed to drive the motor.

The step (E) may include: (E-1) receiving, by the control unit, a speed of the cycle measured by a speed sensor; (E-2) receiving, by the control unit, a pedal angle measured and output by a pedal angle sensor; (E-3) receiving, by the control unit, the pedal angle from the pedal angle sensor to calculate a maximum value and a minimum value of a pedal torque; (E-4) calculating, by the control unit, a slope from the acceleration measured by the acceleration sensor; and (E-5) referring to, by the control unit, offsets of an offset table stored in a database depending on a slope, a speed of the cycle, and a maximum value and a minimum value to remove the offset of the estimated pedal torque.

The step (B) may include: (B-1) detecting, by the control unit, $g\sin\theta + a$ as a pedal frequency synchronization sinusoidal component when a tilt angle of the cycle is set to be $\theta$, a gravitational acceleration among the accelerations output from the acceleration sensor is set to be g, and an acceleration of a progress direction is set to be a; (B-2) estimating, by the control unit, the pedal torque from the pedal frequency synchronization sinusoidal component; and (B-3) driving, by the control unit, the motor depending on the calculated estimated pedal torque.

The method for controlling a motor of an electrical powered cycle may further include: (F) displaying, by the control unit, a mode selection menu on a display unit; and (G) driving, by the control unit, the motor depending on the mode selected by the passenger using a selector switch.

BRIEF DESCRIPTION OF THE DRAWINGS

The above and other objects, features and advantages of the present invention will be more clearly understood from the following detailed description taken in conjunction with the accompanying drawings, in which:

> FIGS. 1 to 4 are exemplified diagrams of an electrical powered cycle in which a motor control apparatus according to a preferred embodiment of the present invention is used;
> FIG. 5 is a configuration diagram of the motor control apparatus according to the preferred embodiment of the present invention;
> FIG. 6 is a diagram for describing an output of an acceleration sensor;
> FIG. 7 is a diagram for describing a pedal torque; and
> FIG. 8 is a flow chart of a method for controlling a motor of an electrical powered cycle according to a preferred embodiment of the present invention.

DESCRIPTION OF THE PREFERRED EMBODIMENTS

The objects, features and advantages of the present invention will be more clearly understood from the following detailed description of the preferred embodiments taken in conjunction with the accompanying drawings. Throughout the accompanying drawings, the same reference numerals are used to designate the same or similar components, and redundant descriptions thereof are omitted. Further, in the following description, the terms "first", "second", "one side", "the other side" and the like are used to differentiate a certain component from other components, but the configuration of such components should not be construed to be limited by the terms. Further, in the description of the present invention, when it is determined that the detailed description of the related art would obscure the gist of the present invention, the description thereof will be omitted.

Hereinafter, preferred embodiments of the present invention will be described in detail with reference to the attached drawings.

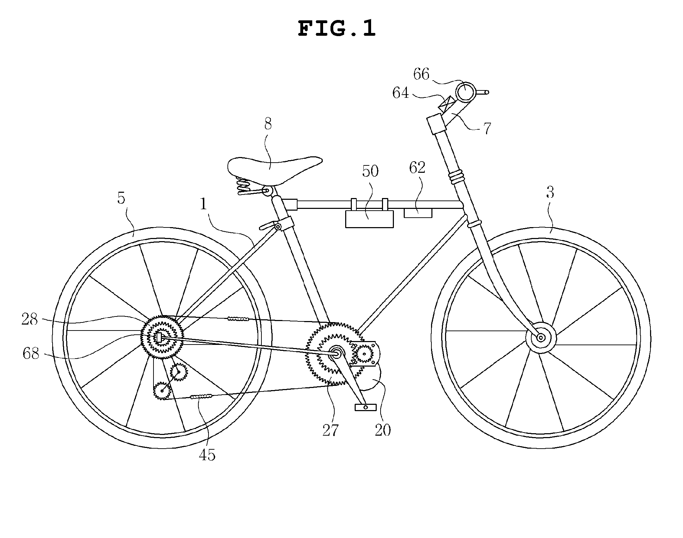

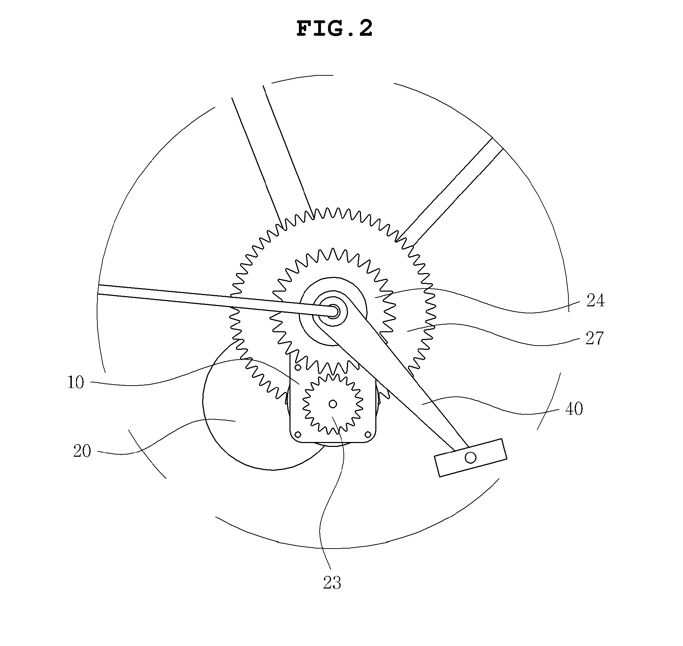

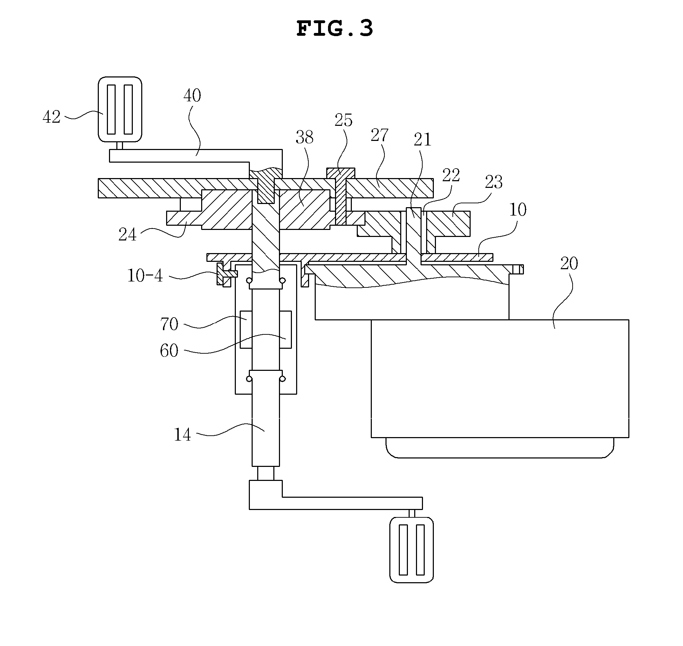

FIGS. 1 to 4 are exemplified diagrams of an electrical powered cycle in which a motor control apparatus according to a preferred embodiment of the present invention is used.

Referring to FIGS. 1 to 4, an electrical powered cycle in which a motor control apparatus according to an exemplary embodiment of the present invention is used includes a frame 1 having a truss structure or a general pipe structure, a front wheel 3 and a rear wheel 5 which are rotatably mounted on the frame 1, a handle 7 which is mounted at a front end of the frame 1, and a saddle 8 which is mounted at a central portion of the frame 1.

Further, the electrical powered cycle includes a crank shaft 14 which is rotatably mounted at a lower portion of a center of the frame 1, cranks 40 which face each other and radially extend from both ends of the crank shaft 14, and pedals 42 which are rotatably mounted at tips of the cranks 40.

Further, the electrical powered cycle includes driving units 20, 21, 22, 23, and 50 which are mounted at one portion of the frame 1 to generate a driving force and power transmission units 24, 25, 27, 28, 38, and 45 which are connected to the crank shaft 14 to transmit a pedal effort generated by rolling the pedals 42 and power from the driving units 20, 21, 22, 23, and 50 to the rear wheel 5.

In this configuration, the driving units 20, 21, 22, 23, and 50 include a motor 20, a motor rotating shaft 21, a motor one-way clutch 22 which is mounted at the motor rotating shaft 21, a motor driving gear 23 which is mounted at the motor one-way clutch 22, and a battery 50 which is mounted between the handle 7 and the saddle 8 of the frame 1.

Further, the power transmission units 24, 25, 27, 28, 38, and 45 include a crank driven gear 24, a fastening part 25 which fixes the crank driven gear 24 to a driving sprocket, a driving sprocket 27, a driven sprocket 28, a crank one-direction clutch 38, and a chain 45 which connects the driving sprocket to the driven sprocket.

Further, the electrical powered cycle includes a fixture 10 which is formed at one side end of a crank housing 12.

The fixture 10 which is a bolt is fixed to an outer wheel of the crank housing 12 by a tightening nut 10-4.

When the fixture 10 is tightened to the outer wheel as described above, a hole 10-2 of the fixture and a hole 10-3 ofthe fixture may be always maintained at a predetermined distance.

Further, the electrical powered cycle is provided with the motor control apparatus which includes an acceleration sensor 60 which is mounted in the crank housing 12, a control unit 62 which is mounted between the handle 7 and the saddle 8 ofthe frame 1, a display unit 64 which is mounted on the handle 7, a selector switch 66 which transmits a selection signal of a passenger, a speedometer 68 which is mounted at the rear wheel 5 to measure a speed of the cycle, a pedal angle sensor 70 which is mounted in the crank housing 12, and the like.

By the above configuration, the electrical powered cycle to which the motor control apparatus according to the exemplary embodiment ofthe present invention is applied is operated as follows.

When a passenger applies the pedal effort to the pedal 42, the crank shaft 14 rotates. Next, a rotational force ofthe crank shaft 14 is transmitted to the driving sprocket 27 through the crank 40.

As a result, the driving sprocket 27 rotates to transmit the rotational force to the driven sprocket 28 through the chain 45 so as to rotate the rear wheel 5, such that the cycle goes forward.

In this case, when the passenger rotates the pedal 42 in a direction opposite to a direction in which a forward motion is made, the rotational force of the crank shaft 14 by the crank one-way clutch 38 is not transmitted to the driving sprocket 27, such that the cycle maintains a previous state.

As described above, when the passenger applies the pedal effort to the pedals 42 to go the cycle forward, the acceleration sensor 60 measures and outputs acceleration of X, Y, and Z components including gravitational acceleration.

In this case, the control unit 62 extracts a pedal frequency synchronization sinusoidal component from the acceleration measured by the acceleration sensor 60 to estimate a pedal torque.

Next, the control unit 62 extracts the pedal frequency synchronization sinusoidal component to estimate the pedal torque.

Further, the control unit 62 controls the motor 20 to generate a driving force which is proportional to or follows the pedal torque estimated from the pedal frequency synchronization sinusoidal component.

Further, the control unit 62 calculates an average estimated pedal torque which is an average value of the estimated pedal torque to be able to control the motor 20 so as to generate the driving force which is proportional to or follows the calculated average estimated pedal torque.

Further, the control unit 62 removes an offset from the estimated pedal torque or the average estimated pedal torque and then uses the estimated pedal torque or the estimated average pedal torque from which the offset is removed to be able to control the motor 20 so as to generate the driving force which is proportional to or follows the pedal torque.

Here, the offset removal of the control unit 62 is made by using an offset which is calculated by receiving the speed of the cycle from the speed sensor 68, receiving a slope from the acceleration sensor 60, and using a maximum value and a minimum value of the estimated pedal torque.

In this case, the control unit 62 may calculate the offset based on Equations, but may easily calculate an offset using an offset table in which the offsets are tabulated by the speed of the cycle, the slope and the maximum value and the minimum value of the pedal torque.

As such, when the motor 20 is controlled by the control unit 62, the driving force is generated and the generated driving force is transmitted to the crank driven gear 24 through the motor driving gear 23.

Further, the driving force continuously transmitted to the driven gear 24 is transmitted to the driving sprocket 27 and is then transmitted to the driven sprocket 28 through the chain 45 to rotate the rear wheel 5.

By the above operation, when the speed of the cycle measured by the speed sensor 68 is equal to or more than a predetermined speed, the control unit 62 controls the motor 20 so as to increase the driving force no more, such that the cycle may maintain a predetermined speed.

Further, the control unit 62 may figure out the slope ofthe cycle from the acceleration of the cycle measured by the acceleration sensor 60 and when the slope of the cycle is equal to or more than a predetermined angle counterclockwise from a ground, makes the driving force of the motor 20 be a multiple of the estimated pedal torque in proportion to the slope, such that when the cycle drives up an inclined place, pedal effort dependency of the passenger may be reduced.

To the contrary, when the slope of the cycle obtained from the acceleration of the cycle measured by the acceleration sensor 60 is equal to or more than a predetermined angle clockwise from the ground, the control unit 62 makes the driving force of the motor 20 be inversely proportional to the estimated pedal torque in proportion to the slope, such that when the cycle drives down an inclined place, the dependency ofthe motor may be reduced.

Meanwhile, the control unit 62 provides various modes through a display unit 64 and when the passenger selects any one of the modes using the selector switch 66, drives the motor 20 depending on the selected mode.

In this case, as the mode which may be selected by the passenger, there are an eco mode, a tour mode, a sport mode, a speed mode, and the like.

Here, the eco mode is a mode which allows the motor to provide the driving force corresponding to 30% of the estimated pedal torque, the tour mode is a mode which allows the motor to provide the driving force corresponding to 50% of the estimated pedal torque, the sport mode is a mode which allows the motor to provide the driving force corresponding to 55% of the estimated pedal torque, and the speed mode is a mode which allows the motor to provide the driving force corresponding to 60% of the estimated pedal torque.

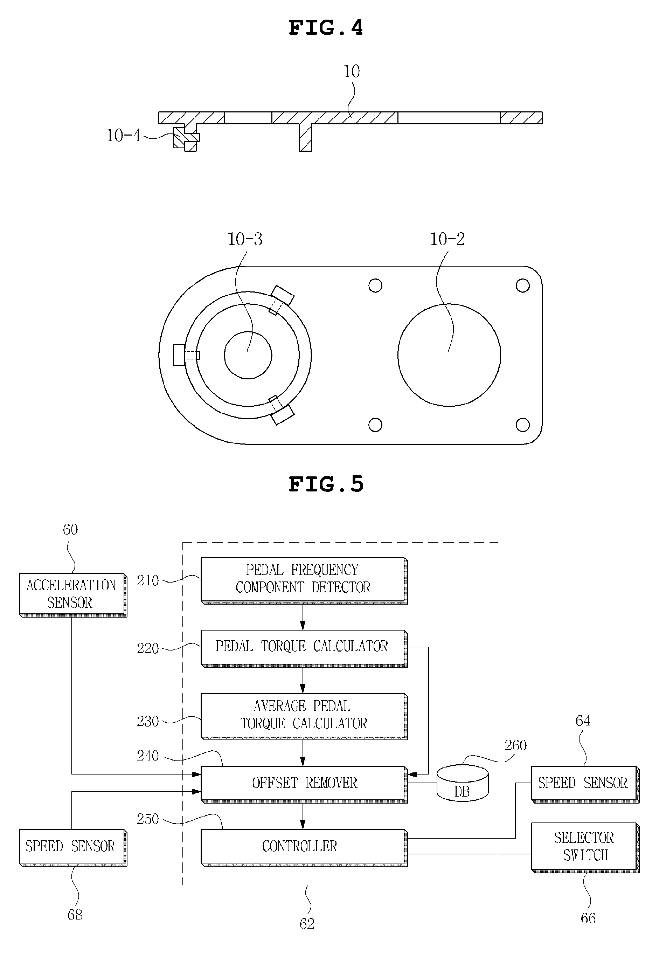

FIG. 5 is a configuration diagram of the motor control apparatus according to the preferred embodiment of the present invention.

Referring to FIG. 5, the motor control apparatus according to the exemplary embodiment of the present invention is configured to include the acceleration sensor 60, the control unit 62, the display unit 64, the selector switch 66, the speed sensor 68, and the pedal angle sensor 70.

Further, the control unit 62 includes a pedal frequency component detector 210, a pedal torque calculator 220, an average pedal torque calculator 230, an offset remover 240, and a controller 250.

When the cycle goes forward by allowing the passenger to apply the pedal effort to the pedals, the acceleration sensor 100 measures and outputs the acceleration of the cycle.

In this case, the acceleration sensor 100 informs acceleration information of the X, Y, and Z components including the gravitational acceleration.

Further, the control unit 62 extracts the pedal frequency synchronization sinusoidal component using the acceleration output from the acceleration sensor 60 and then estimates the pedal torque and controls the motor 20 using the estimated pedal torque from which the offset is removed.

The pedal frequency component detector 210 of the control unit 62 extracts the pedal frequency synchronization sinusoidal component using the acceleration output from the acceleration sensor 60.

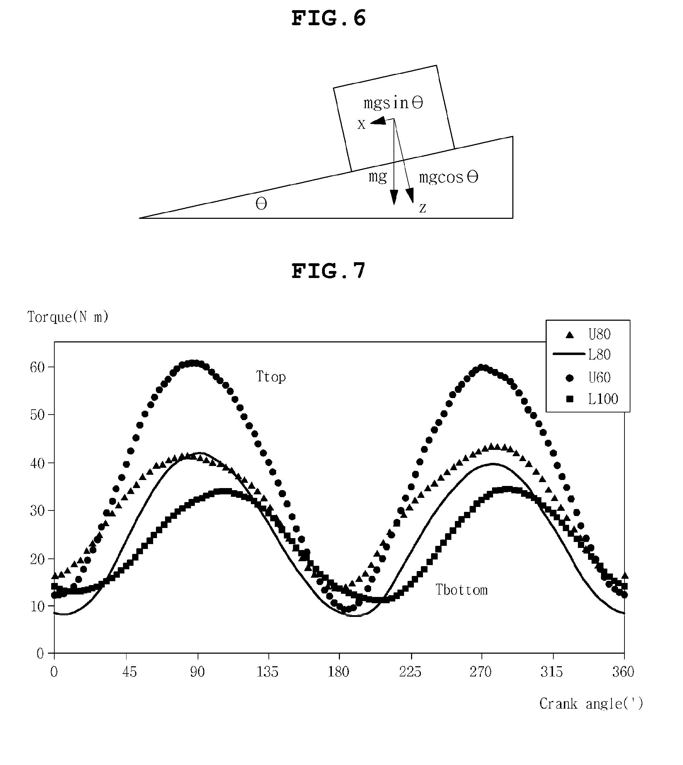

Describing this with reference to FIG. 6, when a tilt angle of a road surface is set to be θ, the acceleration sensor 60 outputs the gravitational acceleration g, gsinθ + a (a is an acceleration of a progress direction) which is the acceleration of the X component, and gcosθ which is the acceleration of the Z component.

In this case, the pedal frequency component detector 210 of the control unit 62 detects the gsinθ + a, which is the acceleration of the X component output from the acceleration sensor 60, as the pedal frequency component.

Meanwhile, the pedal torque calculator 220 of the control unit 62 estimates the pedal torque by multiplying a mass m set by a manufacturer or a passenger of the cycle by the pedal frequency component detected by the pedal frequency component detector 210 to obtain the estimated pedal torque.

The estimated pedal torque calculated by the pedal torque calculator 220 estimates the actual pedal torque well. The reason is as follows.

First, an aerodynamic drag FDRAG is calculated based on the following Equation 1, a friction force FFRIC is calculated based on the following Equation 2, a slope fall force FGRAD1 is calculated based on the following Equation 3, and an acceleration force FGRAD2 is calculated based on the following Equation 4.

[Equation 1]

$$FDRAG = \frac{1}{2} \rho A_f C_d V^2$$

[Equation 2]

$$FFRIC = \mu \, mgcos\theta$$

[Equation 3]

$$FGRAD1 = mgsin\theta$$

[Equation 4]

$$FGRAD2 = ma$$

Meanwhile, which the X component of a tangential direction output from the acceleration sensor 60 is analyzed, a resultant force of a driving force FMOTOR provided by the motor 20 and a driving force FPEDAL generated by the pedals 42 is based on the following Equation 5.

[Equation 5]

$$FMOTOR + FPEDAL = m\,(a+g\sin\Theta\,) + \mu\ mg\cos\Theta\ + FDRAG$$

In the above Equation 5, the driving force generated by the pedals is based on the following Equation 6.

[Equation 6]

$$FPEDAL = m\,(a+g\sin\Theta\,) + \mu\ mg\cos\Theta\ + FDRAG - FMOTOR$$

In the above Equation 6, the driving force generated the left pedal 42 has the sinusoidal component which varies depending on a rotating period of the pedal 42. This may be appreciated from FIG. 7.

In FIG. 7, an X axis represents an angle of the crank shaft and a Y axis represents the pedal torque.

As can be observed from FIG. 7, the pedal torque is largest when the pedal approaches a passenger's chest and is smallest when the pedal is far away from the passenger's chest and FIG. 7 repeatedly illustrates the state, such that the pedal torque has the sinusoidal component whic h varies depending on the rotating period.

In the above Equation 6, the same component needs to be detected in the right, which is a + $g\sin\theta$.

Therefore, the pedal frequency component detector 210 detects the $g\sin\theta$ + a, which is the acceleration of the X component output from the acceleration sensor 60, as the pedal frequency component and the pedal torque calculator 220 of the control unit 62 obtains the estimated pedal torque by multiplying the mass m set by the manufacturer or the passenger of the cycle by the pedal frequency component detected by the pedal frequency component detector 210.

In this case, the mass m set by the manufacturer or the passenger ofthe cycle is obtained by adding a mass m2 of the passenger to a mass m1 of the cycle.

When the manufacturer sets the mass m2 of the passenger, the mass m2 is set based on an average value of weights ofthe adult within a product sales area and when the passenger sets the mass m2, the mass m2 is set by setting the weight of the passenger.

As can be appreciated from FIG. 7, the pedal torque is a sum of AC component and offset component, in which the offset component maybe considered as, for example, Tbottom.

As can be appreciated from FIG. 7, the amount of the offset component Tbottom is relatively small and therefore has an insignificant effect on the performance. Therefore, a torque corresponding to a level which may be applied to the control of the motor without considering the offset component is detected.

Meanwhile, the average pedal torque calculator 230 obtains the average value using the estimated pedal torque calculated by the pedal torque calculator 220 to calculate the average pedal torque.

In this case, an average pedal torque Tpedalaverage as the average value calculated by the average pedal torque calculator 230 is obtained from a difference between a maximum value m*atop and a minimum value m*abottom for one pedal period of the estimated pedal torque calculated by the pedal torque calculator 220 based on the following Equation 7.

[Equation 7]

$$Tpedalaverage = m*(atop-abottom)*0.5$$

Meanwhile, the offset remover 240 outputs the estimated pedal torque which is calculated by the pedal torque calculator 220 and does not have an offset.

A method of allowing the offset remover 240 to remove the offset from the estimated pedal torque calculated by the pedal torque calculator 220 is a method of subtracting a minimum value m*atop for a previous period from the estimated pedal torque for one period.

In this case, in order for the offset remover 240 to find out the minimum value for the previous period, a point at which the pedal angle becomes 180° may be set as the minimum value by using the pedal angle detected by the pedal angle sensor 70.

However, the more precise offset removal may be performed with reference to a database 260 which stores the offset table depending on offset characteristics which represent the speed of the cycle, a Tpeak - Tbottom value for the previous period, and a typical value of inclination.

That is, the offset remover 240 receives the slope from the acceleration sensor 60, receives the speed of the cycle from the speed sensor 68, and receives the Tpeak and Tbottom of the estimated pedal torque from the pedal torque calculator 220 to read the corresponding offset value from the offset table and then subtracts and outputs the offset value from the estimated pedal torque or the average estimated pedal torque calculated by the pedal torque calculator 220 or the average pedal torque calculator 230.

Meanwhile, the database 260 stores the typical offset value depending on the slope and speed of the cycle and the difference between the Tpeak and Tbottom of the pedal torque.

Next, the display unit 64 provides a selection menu for various modes which are provided by the control unit 62 and displays the currently progressing mode, the speed or acceleration of the cycle, and the like.

The selector switch 66 may allow the passenger to select any one mode from the mode menus which are displayed on the display unit 64.

In this case, as the mode which may be selected by the passenger, there are the eco mode, the tour mode, the sport mode, the speed mode, and the like.

Here, the eco mode is a mode which allows the motor to provide the driving force corresponding to 30% of the estimated pedal torque, the tour mode is a mode which allows the motor to provide the driving force corresponding to 50% of the estimated pedal torque, the sport mode is a mode which allows the motor to provide the driving force corresponding to 55% of the estimated pedal torque, and the speed mode is a mode which allows the motor to provide the driving force corresponding to 60% of the estimated pedal torque.

The operation of the motor control apparatus according to the exemplary embodiment of the present invention as described above will be described.

First, when the passenger applies the pedal effort to the pedals 42, the crank shaft 14 rotates. Next, the rotational force of the crank shaft 14 is transmitted to the driving sprocket 27 through the crank 40.

As a result, the driving sprocket 27 rotates to transmit the rotational force to the driven sprocket 28 through the chain 45 so as to rotate the rear wheel 5, such that the cycle goes forward.

As described above, when the passenger applies the pedal effort to the pedals 42 to go the cycle forward, the acceleration sensor 60 measures and outputs the acceleration of X, Y, and Z components including the gravitational acceleration.

In this case, the pedal frequency component detector 210 of the control unit 62 extracts the pedal frequency synchronization sinusoidal component from the acceleration measured by the acceleration sensor 60.

Next, the pedal torque calculator 220 of the control unit 62 extracts the pedal frequency synchronization sinusoidal component to estimate the pedal torque.

Next, the controller 250 of the control unit 62 controls the motor 20 to generate a driving force which is proportional to or follows the pedal torque estimated from the pedal frequency synchronization sinusoidal component.

Further, the control unit 62 calculates the average estimated pedal torque which is the average value of the estimated pedal torque using the average pedal torque calculator 230 to be able to control the motor 20 so as to generate the driving force which is proportional to or follows the calculated average estimated pedal torque.

Further, the control unit 62 removes the offset from the estimated pedal torque or the average estimated pedal torque using the offset remover 240 and then uses the estimated pedal torque or the average estimated pedal torque with the removed offset to be able to control the motor 20 so as to generate the driving force which is proportional to or follows the pedal torque.

Here, the offset remover 240 removes the offset by using an offset which is calculated by receiving the speed of the cycle from the speed sensor 68, receiving the slope from the acceleration sensor 60, and using the maximum value and the minimum value of the estimated pedal torque.

In this case, the offset remover 240 may calculate the offset based on Equation, but may easily calculate the offset using the offset table in which the offsets are tabulated in the database 260 by the speed of the cycle, the slope, and the maximum value and the minimum value of the pedal torque.

Meanwhile, when the speed of the cycle measured by the speed sensor 68 is equal to or more than a predetermined speed, the controller 250 controls the motor 20 so as to increase the driving force no more, such that the cycle may maintain a predetermined speed.

Further, the controller 250 may figure out the slope of the cycle from the acceleration of the cycle measured by the acceleration sensor 60 and when the slope of the cycle is equal to or more than a predetermined angle counterclockwise from a ground, makes the driving force of the motor 20 be a multiple of the estimated pedal torque in proportion to the slope, such that when the cycle drives up an inclined place, pedal effort dependency of the passenger may be reduced.

To the contrary, when the slope of the cycle obtained from the acceleration of the cycle measured by the acceleration sensor 60 is a predetermined angle clockwise from the ground, the controller 250 makes the driving force of the motor 20 be inversely proportional to the estimated pedal torque in proportion to the slope, such that when the cycle drives down an inclined place, the dependency of the motor may be reduced.

Meanwhile, the controller 250 provides various mode menus through the display unit 64 and when the passenger selects any one of the modes using the selector switch 66, drives the motor 20 depending on the selected mode.

According to the preferred embodiments of the present invention, the acceleration sensor which is a very inexpensive element is mounted in the substrate.

Further, according to the preferred embodiments of the present invention, many parameters to obtain the torque information are not used.

Since a unique variable among the parameters used in the preferred embodiments of the present invention is a total mass m (bicycle + passenger), when the total mass is an inputtable and typical value, it is possible to obtain the approximated torque required for the PAS control

Therefore, according to the preferred embodiments of the present invention, the torque sensor is removed, such that costs maybe significantly reduced.

Further, the space occupied by the torque sensor may be reduced and the sensor lines may be removed to reduce the possibility of failure.

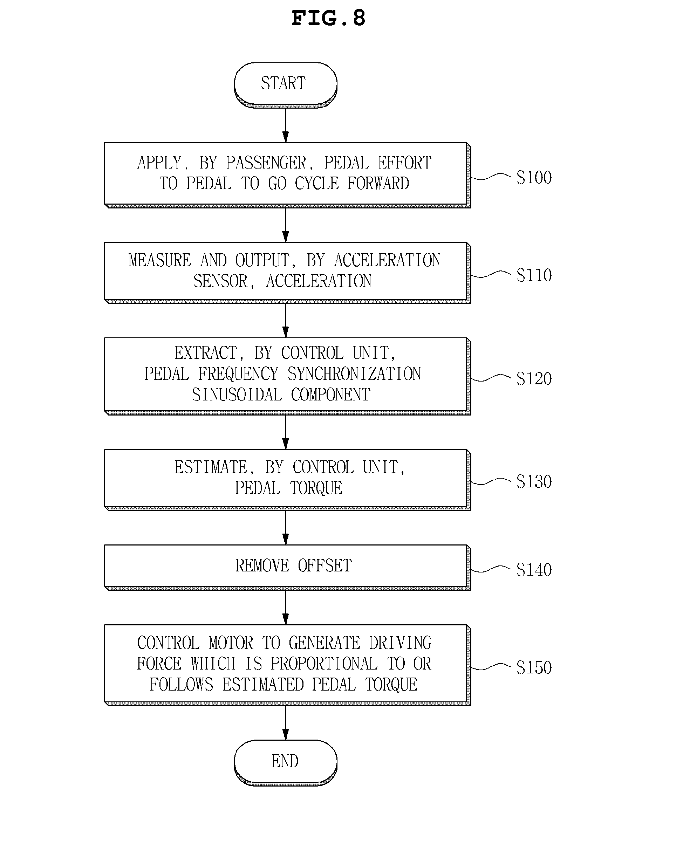

FIG. 8 is a flow chart of a method for controlling a motor of an electrical powered cycle according to a preferred embodiment of the present invention.

Referring to FIG. 8, in the method for controlling a motor of an electrical powered cycle according to the preferred embodiment of the present invention, the passenger first applies the pedal effort to the pedals 42 to rotate the crank shaft 14. In this case, the rotational force of the crank shaft 14 is transmitted to the driving sprocket 27 through the crank 40 to rotate the driving sprocket 27, such that the rotational force is transmitted to the driven sprocket 28 through the chain 45 to rotate the rear wheel 5, thereby going the cycle forward (S100).

As described above, when the passenger applies the pedal effort to the pedals 42 to go the cycle forward, the acceleration sensor 60 measures and outputs the acceleration of X, Y, and Z components including the gravitational acceleration (S110).

Next, the control unit extracts the pedal frequency synchronization sinusoidal component from the acceleration measured by the acceleration sensor (S120) to estimate the pedal torque (S130).

Further, the control unit removes the offset from the estimated pedal torque (S140) and uses the estimated pedal torque from which the offset is removed to be able to control the motor to generate the driving force which is proportional to or follows the pedal torque (S 150).

In this case, the offset removal of the control unit is made by using the offset which is calculated by receiving the speed of the cycle from the speed sensor, receiving the slope from the acceleration sensor, and using the maximum value and the minimum value of the estimated pedal torque.

In this case, the control unit may calculate the offset based on Equations, but may easily calculate the offset using the offset table in which the offsets are tabulated by the speed of the cycle, the slope, and the maximum value and the minimum value of the pedal torque.

Further, the control unit calculates the average estimated pedal torque which is the average value of the estimated pedal torque to be able to control the motor so as to generate the driving force which is proportional to or follows the calculated average estimated pedal torque.

Even in this case, the control unit removes the offset from the average estimated pedal torque and uses the average estimated pedal torque from which the offset is removed to be able to control the motor to generate the driving force which is proportional to or follows the pedal torque.

Meanwhile, when the speed of the cycle measured by the speed sensor of the control unit is equal to or more than a predetermined speed, the control unit controls the motor so as to increase the driving force no more, such that the cycle may maintain a predetermined speed.

Further, the control unit may figure out the slope of the cycle from the acceleration of the cycle measured by the acceleration sensor 60 and when the slope of the cycle is equal to or more than a predetermined angle counterclockwise from the ground, makes the driving force of the motor be a multiple of the estimated pedal torque in proportion to the slope, such that when the cycle drives up an inclined place, the pedal effort dependency of the passenger may be reduced.

To the contrary, when the slope of the cycle obtained from the acceleration of the cycle measured by the acceleration sensor is a predetermined angle clockwise from the ground, the control unit makes the driving force of the motor be inversely proportional to the estimated pedal torque in proportion to the slope, such that when the cycle drives down an inclined place, the dependency of the motor may be reduced.

Meanwhile, the control unit provides various modes through the display unit and when the passenger selects any one of the modes using the selector switch, may drive the motor depending on the selected mode.

In this case, as the mode which may be selected by the passenger, there are the eco mode, the tour mode, the sport mode, the speed mode, and the like.

Therefore, according to the preferred embodiments of the present invention, the torque sensor is removed, such that costs may be significantly reduced. Further, the space occupied by the torque sensor may be reduced and the sensor lines may be removed to reduce the possibility of failure.

According to the preferred embodiments ofthe present invention, the acceleration sensor which is a very inexpensive element is mounted in the substrate.

Further, according to the preferred embodiments of the present invention, many parameters to obtain the torque information are not used.

Since a unique variable among the parameters used in the preferred embodiments ofthe present invention is a total mass m (cycle + passenger), when the total mass is an inputtable and typical value, it is possible to obtain the approximated torque required for the PAS controLTherefore, according to the preferred embodiments of the present invention, the torque sensor is removed, such that costs may be significantly reduced.

Further, the space occupied by the torque sensor may be reduced and the sensor lines may be removed to reduce the possibility of failure.

Although the embodiments of the present invention have been disclosed for illustrative purposes, it will be appreciated that the present invention is not limited thereto, and those skilled in the art will appreciate that various modifications, additions and substitutions are possible, without departing from the scope and spirit of the invention.

Accordingly, any and all modifications, variations or equivalent arrangements should be considered to be within the scope of the invention, and the detailed scope of the invention will be disclosed by the accompanying claims.

**Claims**

1. An apparatus for controlling a motor of an electrical powered cycle, comprising:

   an acceleration sensor mounted in the electrical powered cycle to measure and output an acceleration; and
   a control unit extracting a pedal frequency synchronization sinusoidal component from the acceleration output from the acceleration sensor to estimate a pedal torque and then drive the motor depending on the estimated pedal torque.

2. The apparatus as set forth in claim 1, wherein the control unit detects gsin6 + a as the pedal frequency synchronization sinusoidal component when a tilt angle ofthe cycle is set to be θ, a gravitational acceleration among accelerations output from the acceleration sensor is set to be g, and an acceleration of a progress direction is set to be a.

3. The apparatus as set forth in claim 1, wherein the control unit drives the motor depending on an average estimated pedal torque which is an average value of the estimated pedal torque.

4. The apparatus as set forth in claim 3, wherein the control unit removes an offset from an average pedal torque and uses the average pedal torque from which the offset is removed to drive the motor.

5. The apparatus as set forth in claim 1, wherein the control unit removes an offset from the estimated pedal torque and uses the estimated pedal torque from which the offset is removed to drive the motor.

6. The apparatus as set forth in claim 1, wherein the control unit includes:

   a pedal frequency component detector which detects gsin 8 + a as a pedal frequency synchronization sinusoidal component when a tilt angle of the cycle is set to be θ, a gravitational acceleration among the accelerations output from the acceleration sensor is set to be g, and an acceleration of a progress direction is set to be a;
   a pedal torque calculator which estimates the pedal torque from the pedal frequency synchronization sinusoidal component from the pedal frequency component det ector; and
   a controller which drives the motor depending on the estimated pedal torque calculated by the pedal torque calculator.

7. The apparatus as set forth in claim 6, wherein the control unit further includes:

   an average pedal torque calculator which obtains an average estimated pedal torque from a difference between a maximum value and a minimum value for one pedal period of the estimated pedal torque calculated by the pedal torque calculator, and
the controller drives the motor depending on the average estimated pedal torque which is calculated by the average pedal torque calculator.

8. The apparatus as set forth in claim 6, wherein the control unit further includes:

an offset remover which removes the offset from the estimated pedal torque calculat ed by the pedal torque calculator, and
the controller drives the motor depending on the estimated pedal torque from which the offset is removed.

9. The apparatus as set forth in claim 8, wherein the control unit includes:

a speed sensor measuring and outputting a speed ofthe cycle;
a pedal angle sensor measuring and outputting a pedal angle; and
a database storing an offset table in which offsets are tabulated by the speed of the cycle, a slope, and a maximum value and a minimum value of the pedal torque, and
the offset controller calculates the slope using the acceleration measured by the acceleration sensor, receives the speed of the cycle from the speed sensor, and receives the pedal angle from the pedal angle sensor to calculate the maximum value and the minimum value of the pedal torque calculated by the pedal torque calculator and then refers to the offsets of the offset table stored in a database depending on the slope, the speed ofthe cycle, and the maximum value and the minimum value to remove the offset ofthe estimated pedal torque.

10. The apparatus as set forth in claim 1, further comprising:

a display unit displaying a mode selection menu; and
a selector switch receiving a selection signal of a passenger,
wherein the control unit displays the mode selection menu on the display unit and when the passenger selects a mode using the selector switch, drives the motor depending on the estimated pedal torque depending on the selected mode.

11. A method for controlling a motor of an electrical powered cycle, comprising:

(A) measuring and outputting, by an acceleration sensor, an acceleration ofthe electrical powered cycle; and
(B) extracting, by a control unit, a pedal frequency synchronization sinusoidal component from the acceleration output from the acceleration sensor to estimate a pedal torque and then drive the motor depending on the estimated pedal torque.

12. The method as set forth in claim 1 l, further comprising:

(C) calculating, by the control unit, an average estimated pedal torque which is an average value ofthe estimated pedal torque,
wherein the control unit drives the motor depending on the average estimated pedal torque.

13. The method as set forth in claim 12, further comprising:

after the estimating of the average estimated pedal torque in the step (C), (D) removing, by the control unit, an offset from the average estimated pedal torque and using the average estimated pedal torque from which the offset is removed to drive the motor.

14. The method as set forth in claim 11, further comprising:

after the estimating of the pedal torque in the step (B), (E) removing, by the control unit, the offset from the estimated pedal torque and using the estimated pedal torque from which the offset is removed to drive the motor.

15. The method as set forth in claim 14, wherein the step (E) includes:

(E-1) receiving, by the control unit, a speed of the cycle measured by a speed sensor;
(E-2) receiving, by the control unit, a pedal angle measured and output by a pedal angle sensor;

(E-3) receiving, by the control unit, the pedal angle from the pedal angle sensor to calculate a maximum value and a minimum value of a pedal torque;

(E-4) calculating, by the control unit, a slope from the acceleration measured by the acceleration sensor; and

(E-5) referring to, by the control unit, offsets of an offset table stored in a database depending on a slope, a speed of the cycle, and a maximum value and a minimum value to remove the offset of the estimated pedal torque.

16. The method as set forth in claim 11, wherein the step (B) includes:

(B-1) detecting, by the control unit, gsinθ + a as a pedal frequency synchronization sinusoidal component when a tilt angle of the cycle is set to be θ, a gravitational acceleration among the accelerations output from the acceleration sensor is set to be g, and an acceleration of a progress direction is set to be a;

(B-2) estimating, by the control unit, the pedal torque from the pedal frequency synchronization sinusoidal component; and

(B-3) driving, by the control unit, the motor depending on the calculated estimated pedal torque.

17. The method as set forth in claim 11, further comprising:

(F) displaying, by the control unit, a mode selection menu on a display unit; and

(G) driving, by the control unit, the motor depending on the mode selected by the passenger using a selector switch.

# FIG.1

# FIG.2

# FIG.3

# FIG.4

# FIG.5

## FIG.6

## FIG.7

# FIG.8

```
                    ┌─────────────┐
                    │    START    │
                    └──────┬──────┘
                           │
                           ▼
        ┌───────────────────────────────────────┐
        │  APPLY, BY PASSENGER, PEDAL EFFORT     │ ～S100
        │    TO PEDAL TO GO CYCLE FORWARD        │
        └───────────────────┬───────────────────┘
                            │
                            ▼
        ┌───────────────────────────────────────┐
        │  MEASURE AND OUTPUT, BY ACCELERATION   │ ～S110
        │       SENSOR, ACCELERATION             │
        └───────────────────┬───────────────────┘
                            │
                            ▼
        ┌───────────────────────────────────────┐
        │       EXTRACT, BY CONTROL UNIT,        │
        │  PEDAL FREQUENCY SYNCHRONIZATION       │ ～S120
        │        SINUSOIDAL COMPONENT            │
        └───────────────────┬───────────────────┘
                            │
                            ▼
        ┌───────────────────────────────────────┐
        │       ESTIMATE, BY CONTROL UNIT,       │ ～S130
        │           PEDAL TORQUE                 │
        └───────────────────┬───────────────────┘
                            │
                            ▼
        ┌───────────────────────────────────────┐
        │             REMOVE OFFSET              │ ～S140
        └───────────────────┬───────────────────┘
                            │
                            ▼
        ┌───────────────────────────────────────┐
        │  CONTROL MOTOR TO GENERATE DRIVING     │
        │  FORCE WHICH IS PROPORTIONAL TO OR     │ ～S150
        │   FOLLOWS ESTIMATED PEDAL TORQUE       │
        └───────────────────┬───────────────────┘
                            │
                            ▼
                    ┌─────────────┐
                    │     END     │
                    └─────────────┘
```

**EP 2 860 096 A1**

Europäisches Patentamt
European Patent Office
Office européen des brevets

# EUROPEAN SEARCH REPORT

Application Number

EP 14 16 7830

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 196 30 553 A1 (RUEHLE REINER [DE]) 29 January 1998 (1998-01-29) * the whole document * | 1-16 | INV. B62M6/50 |
| X | WO 2006/029514 A1 (9141 7030 QUEBEC INC [CA]; DUBE JEAN-YVES [CA]; LAROSE PASCAL [CA]) 23 March 2006 (2006-03-23) * the whole document * | 1-17 | |
| X | DE 10 2011 083980 A1 (SCHAEFFLER TECHNOLOGIES AG [DE]) 4 April 2013 (2013-04-04) * claims 1 - 7; figures 1 -10 * | 1,11 | |
| X | JP 2004 025913 A (MATSUSHITA ELECTRIC IND CO LTD) 29 January 2004 (2004-01-29) * the whole document * | 1,11 | |
| X | DE 197 55 309 A1 (STROTHMANN ROLF DR RER NAT [DE]) 17 June 1999 (1999-06-17) * the whole document * | 1,11 | |
| A | EP 2 599 707 A1 (PANASONIC CORP [JP]) 5 June 2013 (2013-06-05) * figures 4A - 4C, 5 * | 1,10,11, 17 | TECHNICAL FIELDS SEARCHED (IPC)<br>B62M |
| A | EP 0 926 059 A2 (MATSUSHITA ELECTRIC IND CO LTD [JP] MATSUSHITA ELECTRIC IND CO LTD [JP]) 30 June 1999 (1999-06-30) * figure 10 * | 1,9,15 | |
| A | EP 0 976 649 A2 (SONY CORP [JP]) 2 February 2000 (2000-02-02) * figures 1 - 46 * | 1,9,11, 15 | |
| A | DE 10 2012 201881 A1 (BOSCH GMBH ROBERT [DE]) 17 January 2013 (2013-01-17) * figures 1-3 * | 1,2,6, 11,16 | |

-/--

The present search report has been drawn up for all claims

| Place of search | Date of completion of the search | Examiner |
|---|---|---|
| The Hague | 9 February 2015 | Molina Encabo, Aitor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

19

Europäisches
Patentamt

European
Patent Office

Office européen
des brevets

## EUROPEAN SEARCH REPORT

Application Number

EP 14 16 7830

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2013/179016 A1 (GALE STEPHEN WILLIAM [AU]) 11 July 2013 (2013-07-11) * figures 1 - 3 * | 1,2,6,9, 11,16 | |
| A | JP 2005 335405 A (MATSUSHITA ELECTRIC IND CO LTD) 8 December 2005 (2005-12-08) * figures 1-6 * | 1,11 | |
| A | US 4 526 036 A (THOMAS R. MORRISON) 2 July 1985 (1985-07-02) * the whole document * | 1,11 | |

TECHNICAL FIELDS
SEARCHED (IPC)

The present search report has been drawn up for all claims

| Place of search | Date of completion of the search | Examiner |
|---|---|---|
| The Hague | 9 February 2015 | Molina Encabo, Aitor |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 14 16 7830

This annex lists the patent family members relating to the patent documents cited in the above-mentioned European search report.
The members are as contained in the European Patent Office EDP file on
The European Patent Office is in no way liable for these particulars which are merely given for the purpose of information.

09-02-2015

| Patent document cited in search report | | Publication date | Patent family member(s) | | Publication date |
|---|---|---|---|---|---|
| DE 19630553 | A1 | 29-01-1998 | AU | 4010097 A | 10-02-1998 |
| | | | DE | 19630553 A1 | 29-01-1998 |
| | | | DE | 19780720 D2 | 14-10-1999 |
| | | | WO | 9803392 A1 | 29-01-1998 |
| WO 2006029514 | A1 | 23-03-2006 | CA | 2579917 A1 | 23-03-2006 |
| | | | EP | 1799538 A1 | 27-06-2007 |
| | | | EP | 2338782 A2 | 29-06-2011 |
| | | | US | 2008071436 A1 | 20-03-2008 |
| | | | WO | 2006029514 A1 | 23-03-2006 |
| DE 102011083980 | A1 | 04-04-2013 | NONE | | |
| JP 2004025913 | A | 29-01-2004 | JP | 4024091 B2 | 19-12-2007 |
| | | | JP | 2004025913 A | 29-01-2004 |
| DE 19755309 | A1 | 17-06-1999 | AU | 1757499 A | 05-07-1999 |
| | | | DE | 19755309 A1 | 17-06-1999 |
| | | | EP | 1037795 A1 | 27-09-2000 |
| | | | ES | 2173656 T3 | 16-10-2002 |
| | | | JP | 2002508280 A | 19-03-2002 |
| | | | US | 6545437 B1 | 08-04-2003 |
| | | | WO | 9930959 A1 | 24-06-1999 |
| EP 2599707 | A1 | 05-06-2013 | EP | 2599707 A1 | 05-06-2013 |
| | | | JP | 4906982 B1 | 28-03-2012 |
| | | | WO | 2012014396 A1 | 02-02-2012 |
| EP 0926059 | A2 | 30-06-1999 | EP | 0926059 A2 | 30-06-1999 |
| | | | TW | 387848 B | 21-04-2000 |
| EP 0976649 | A2 | 02-02-2000 | DE | 69711342 D1 | 02-05-2002 |
| | | | DE | 69711342 T2 | 21-11-2002 |
| | | | DE | 69728437 D1 | 06-05-2004 |
| | | | DE | 69728437 T2 | 03-03-2005 |
| | | | EP | 0846614 A1 | 10-06-1998 |
| | | | EP | 0976649 A2 | 02-02-2000 |
| | | | JP | 3682590 B2 | 10-08-2005 |
| | | | JP | H1035576 A | 10-02-1998 |
| | | | TW | 470037 U | 21-12-2001 |
| | | | US | 6247548 B1 | 19-06-2001 |
| | | | US | 2003047369 A1 | 13-03-2003 |
| | | | WO | 9745316 A1 | 04-12-1997 |
| DE 102012201881 | A1 | 17-01-2013 | NONE | | |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**                     EP 14 16 7830

This annex lists the patent family members relating to the patent documents cited in the above-mentioned European search report.
The members are as contained in the European Patent Office EDP file on
The European Patent Office is in no way liable for these particulars which are merely given for the purpose of information.

09-02-2015

| Patent document cited in search report | | Publication date | Patent family member(s) | | Publication date |
|---|---|---|---|---|---|
| US 2013179016 | A1 | 11-07-2013 | NONE | | |
| JP 2005335405 | A | 08-12-2005 | JP | 4641740 B2 | 02-03-2011 |
| | | | JP | 2005335405 A | 08-12-2005 |
| US 4526036 | A | 02-07-1985 | NONE | | |

EPO FORM P0459

For more details about this annex : see Official Journal of the European Patent Office, No. 12/82

**REFERENCES CITED IN THE DESCRIPTION**

**Patent documents cited in the description**

- KR 1020130120762
- KR 1020130034424
- KR 1020130013115